# EUROPEAN PATENT SPECIFICATION

(11) **EP 2 989 043 B1**
(45) Date of publication and mention of the grant of the patent: **20.09.2017**
(21) Application number: 14732417.2
(22) Date of filing: 26.03.2014
(51) Int. Cl.: B66D 1/74, F16H 55/50

(54) **PULLEY FOR HIGH-EFFICIENCY WINCH**
RIEMENSCHEIBE FÜR EINE HOCHEFFIZIENTE WINDE
POULIE POUR TREUIL À HAUT RENDEMENT

(30) Priority: 22.04.2013 IT TO20130322
(43) Date of publication of application: 02.03.2016
(73) Proprietor: Kite Gen Research S.R.L., 10099 San Mauro Torinese (TO) (IT)
(72) Inventor: IPPOLITO, Massimo, I-10099 San Mauro Torinese (TO) (IT)
(74) Representative: Garavelli, Paolo
(86) International application number: PCT/IT2014/000081
(87) International publication number: WO 2014/174541

(56) References cited:
- WO-A1-01/68505
- CN-A- 102 011 842
- DE-C- 518 706
- ES-A1- 2 125 122
- GB-A- 1 237 637
- SU-A1- 885 135
- US-A- 663 928
- US-A- 3 105 676
- US-A- 4 074 582
- US-A- 4 936 549
- US-A- 5 582 555

## Description

The present invention deals with an improved pulley for high-efficiency winch, of the type used for transmitting mechanical energy by means of traction forces applied to ropes connected to a moving load.

A high-efficiency winch is used in several applications, for lifting or moving a load, dragging a rope and transmitting energy by means of a rope adapted to be wound.

Recently, the application of winches for transmitting energy has become important in the sector of managing wind energy, wherein the winches, connected to alternators and electronic power apparatuses, are used for extracting kinetic energy from wind and for converting the produced mechanical energy into electric energy.

An important aspect in recovering mechanical energy from ropes connected to a moving load is given by the efficiency of the driving winch, for which: small percentages of energy imply a high heating of the driving pulleys and of the rope.

A process for extracting energy from wind implies the use of high-resistance ropes. The rope tension is generated by the lift of a kite flying with transverse wind. The pulley or the drum, on which the rope is wound, rotates due to the unwinding force induced by the rope itself. The mechanical power is generated by the combination of the mechanical tension in the rope and the speed with which the rope is stretched, being unwound from the pulley.

The pulley or the drum, on which the rope is wound, rotates due to the unwinding force induced by the rope itself. During this process, the wind kinetic energy is firstly converted into mechanical energy, due to the friction between rope and contact surface of the pulley or the drum; it is then converted into electric energy through alternators connected to the winch.

During the conversion, energy losses occur as heat which heats the contact surface of the pulley and increases the internal temperature of the rope compromising the mechanical properties due to overheating.

Conventional winches are not suitable for transmitting a great amount of energy due to their low efficiency. When there is a high-power winch equipped with high-resistance ropes, even a relatively small part of lost power could be critical. For example, a winch with a 97% efficiency, used for manipulating a power of 1.5 MW, generates a 45 kW thermal flow which must be suitably dissipated to prevent the rope from overheating. Together with the losses generated by the bearings of the rotary elements, the heat flow is mainly generated by the friction forces between rope and pulley.

Friction inside the rope is generated by relative displacements and distortions of different wires and braids, composing the rope and geometrically arranged in order to mutually scrape. On the other hand, friction between rope and pulley is the necessary ingredient to allow the winch to extract energy from the rope, while friction depending on any relative displacement between rope and pulley must be reduced to a minimum.

The architecture of a high-efficiency winch must comply with two concepts: the rope moving along the winch is subjected to a tension gradient associated with a distortion gradient depending on the nature of the material composing the rope; the rope wound on a pulley for more than one revolution, assuming that the pulley rotates with respect to its own longitudinal axis, must necessarily translate perpendicular to the direction of the main transmission force, for example along the longitudinal axis of the pulley, in order to prevent rope sections with different curvatures from overlapping.

WO2011121272 discloses an application dealing with the first concept, aimed to make more uniform the distortion gradient, making the rope less stressed and subjected to degrade effects. This problem is solved with two co-penetrating pulleys, each one of which defines a discontinuous surface of the contact between rope and drum.

FR1105165 discloses a layout of a winch dealing with the second concept, comprising pulleys with cylindrical grooves whose diameter gradually decreases or increases being adapted to the different distortion status along the rope, so that the groove with bigger diameter is in contact with the rope section subjected to a high tension status and vice versa. US 3 105 676 A discloses a pulley according to the preamble of claim 1. Object of the present invention is solving the above prior art problems, by providing an improved pulley for high-efficiency winch, in favor of a higher energy productivity and a reduction of the power losses due to friction phenomena, and in favor of a reduced rope wear.

The above and other objects and advantages of the invention, as will result from the following description, are obtained with an improved pulley as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the the enclosed claims.

The present invention will be better described by some preferred embodiments thereof, provided as a non-limiting example, with reference to the enclosed drawings, in which:
- Figure 1 shows a perspective view of a pulley not forming part of the present invention connected to a rope;
- Figures 2 and 3 show perspective views of components belonging to each peripheral support connected to the pulley of Figure 1;
- Figure 4 shows a front view of the pulley of Figure 1;
- Figure 5 shows a sectional view, along a plane passing for line V-V in Figure 4;
- Figure 6 shows an enlarged part VI belonging to Figure 4;
- Figure 7 shows an enlarged part VII belonging to Figure 5;
- Figure 8 shows different configurations a, b, c, along a plane X-Z of Figure 5, of a connection between element belonging to each peripheral support connected to the pulley of Figure 1;
- Figure 9 shows a diagram of configurations a, b, c of Figure 8;
- Figure 10 shows a combined system of several pulleys of the type shown in Figure 1;
- Figure 11 shows a perspective view of a peripheral support belonging to an embodiment of the present invention;
- Figure 12 shows a front view of the peripheral support of the previous Figure;
- Figure 13 shows a sectional view along line XIII-XIII of Figure 12;
- Figure 14 shows a side view of an operating diagram of the peripheral support of Figure 11;
- Figure 15 shows a perspective view of a prismatic insert belonging to the peripheral support of Figure 11;
- Figure 16 shows a side view of the insert of Figure 15;
- Figure 17 shows a perspective view of a peripheral support belonging to a third embodiment not forming part of the present invention;
- Figure 18 shows a perspective view of a part of the previous Figure;
- Figure 19 shows a front view of the peripheral support of Figure 17;
- Figure 20 shows a sectional view along line XX-XX of Figure 19;
- Figure 21 shows a perspective view of a variation of the peripheral support of Figure 17; and
- Figure 22 shows a perspective view of a part of Figure 21.

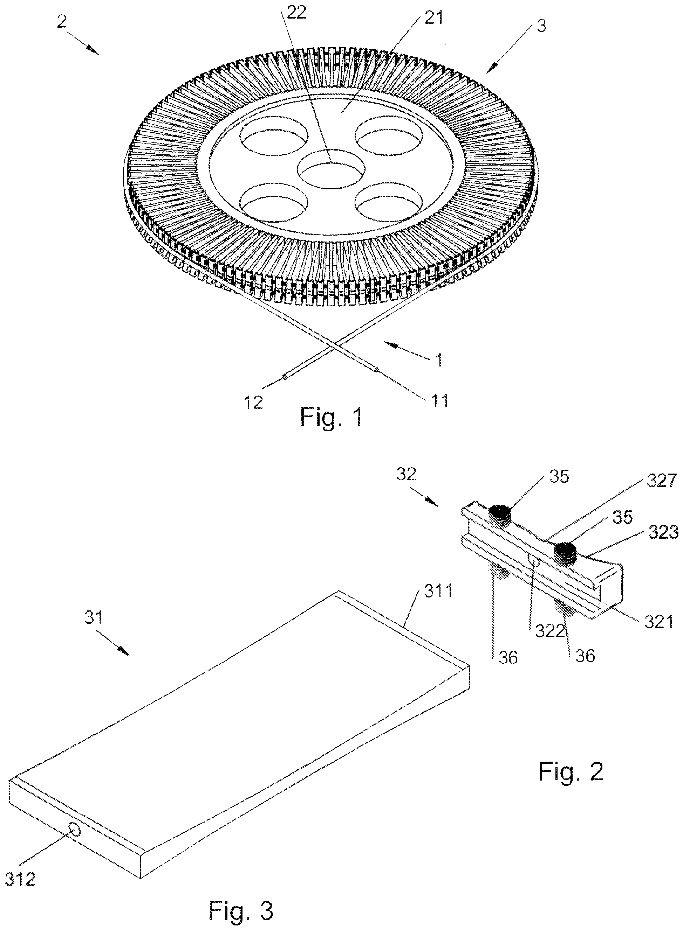

With reference to Figure 1, it is possible to note that at least one section of a rope 1, included between an inlet section 11 and an outlet section 12, is wound by a fraction of revolution around a pulley 2.

The pulley 2 is composed of a disk 21 equipped with a central hole 22 used for centring and joining with a shaft (not shown) connected to a high-efficiency winch (not shown).

The inlet section 11 and the outlet section 12 of the rope 1 are respectively connected to a working load (not shown) and a storage device (not shown) or another resisting load, according to a tension gradient which establishes a maximum tension value at the inlet section 11 and a minimum or null value at the outlet section 12.

Advantageously, the improved pulley 2 not forming part of the present invention for winch in contact with at least one of such sections of rope 1 included between the inlet section 11 connected to the working load and an outlet section 12 connected to the resisting load, comprises a plurality of peripheral supports 3, 4, 5, 6 deformable depending on a length variation of the section of rope 1 itself, due to such tension gradient.

With reference to Figures 1, 2 and 3, it is possible to note that the disk 21 supports a section of rope 1 by means of a plurality of peripheral supports 3 uniformly arranged along a circumference of such disk 21.

Each peripheral support comprises:
- a structure 31 composed of at least one tip, tapered in order to be slim and flexible with respect to a first inertial axis thereof, fat and rigid with respect to a second inertial axis thereof, equipped at the ends with holes 311 (hidden) and 312;
- at least one prismatic insert 32, comprising a transverse groove 321 and a blind hole 322, having a suitably tapered dorsal surface 323.

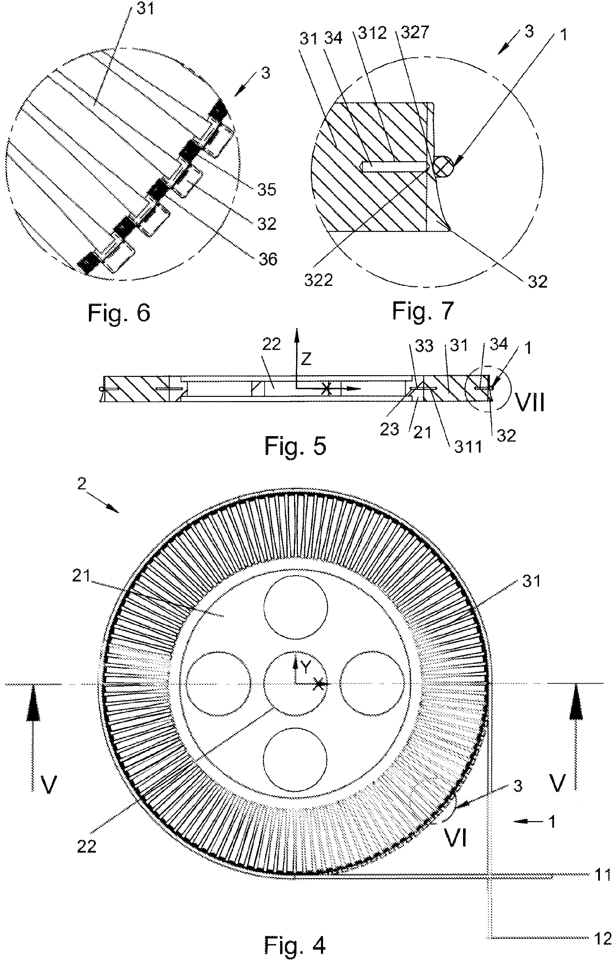

With reference to Figures 4 to 7, it is possible to note that each peripheral support 3 is integral with the periphery of the disk 21 through the tip 31. The tip 31 is connected to the disk 21. through a pin 33 inserted into the hole 311 and into an hole 23 obtained on the external circumferential wall of the disk 21 (as shown, for example, in Figure 5). The prismatic insert 32 is connected to the tip 31 through a pin 34 inserted into the hole 312 and the hole 322 (as shown, for example, in Figure 7).

The rope 1 is wound by a fraction of a revolution onto the pulley 2 through the contact with the dorsal surface 323 of each prismatic insert 32.

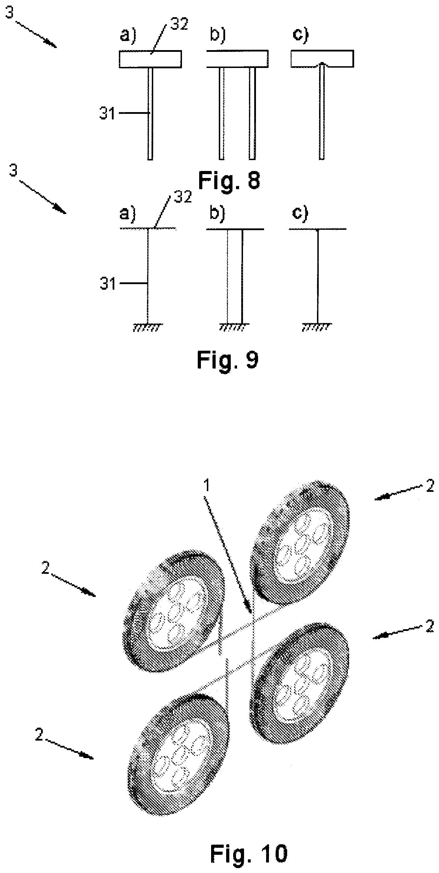

With reference to Figures 8 and 9, it is possible to note that each peripheral support 3 can be respectively made with a flexible engagement a, a rigid engagement b, a mechanism c, according to the way with which tip 31 and prismatic insert 32 are joined.

According to a variation of such first embodiment not forming part of the present invention each peripheral support 3 is elastically connected to the two adjacent supports through a bumper 35, 36, composed of cylindrical helical springs (as shown, for example, in Figure 2), housed in respective walls of each prismatic insert 32, tangentially operating in a plane X-Y orthogonal to the rotation axis of the pulley 2 (as shown, for example, in Figure 4), making a pulley 2 equipped with an elastic chain of peripheral supports 3.

Always according to such embodiment variation, such tip 31 is composed of at least one slanted rod adapted to be straightened by elastically deforming itself with respect to an engaged end thereof.

The dorsal surface 323 of each prismatic insert 32 is equipped with at least one circumferential groove 327 for guiding the rope 1 (as shown, for example, in Figure 7). An embodiment of the present invention is described below.

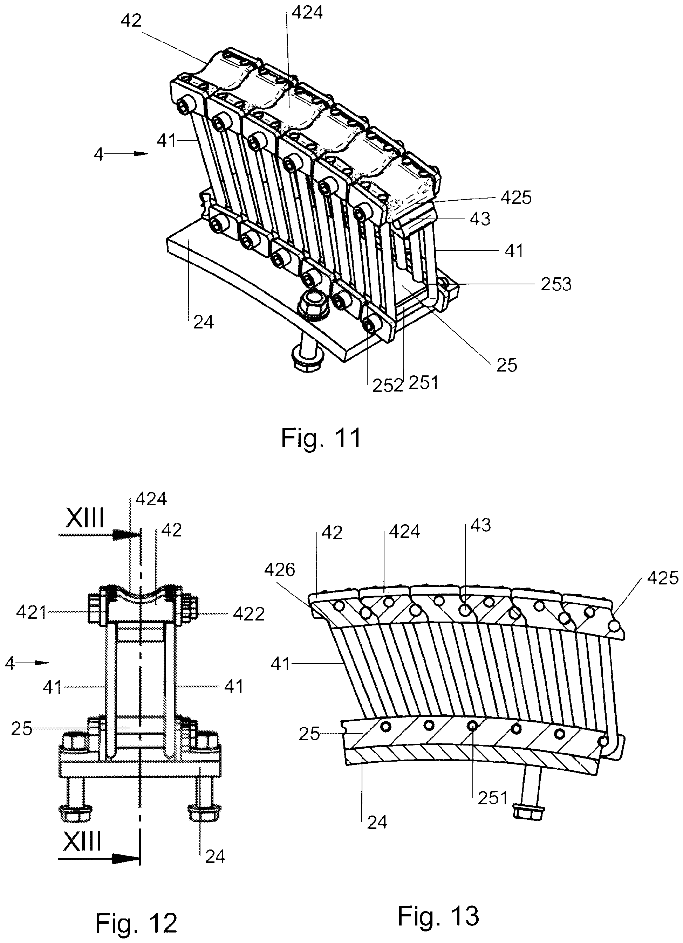

With reference to Figures 11 to 16, it is possible to note that the disk 21 (not shown) supports a section of rope 1 (not shown) by means of a plurality of peripheral supports 4 uniformly arranged along a circumference of the disk 21.

The disk 21 comprises a peripheral ring composed of a cylindrical band 24 surmounted by a flange 25 crossed by a series of cylindrical holes 251 uniformly arranged on a circumference centered with respect to the rotation axis of the pulley 2.

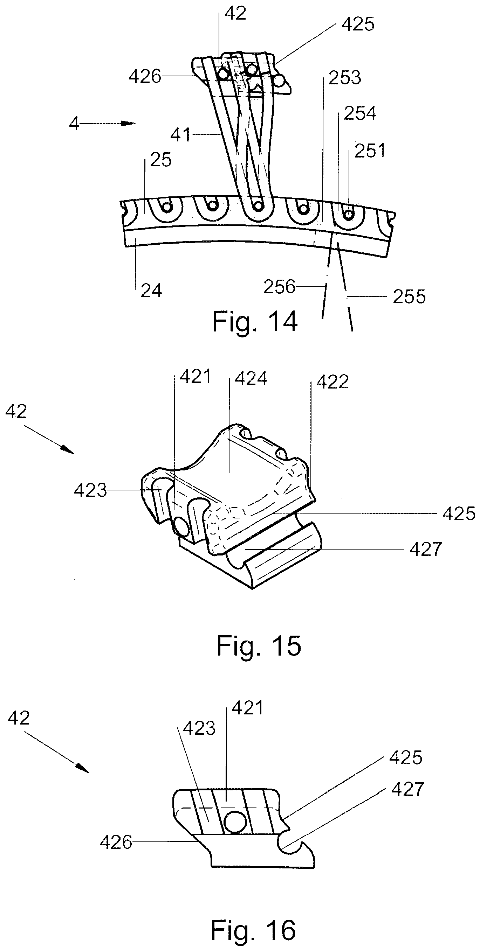

Each side wall 252, 253, of such flange 25 comprises an uniformly arranged series of grooves 254 composed of a semi-circular section centered with respect to such cylindrical hole 251 and tangent to a pair of rectilinear sections going out of the peripheral edge of such flange 25 (as shown, for example, in Figure 14).

Each of such peripheral supports 4 comprises:
- a structure 41 composed of an inclined, U-bent pair of harmonic wires adapted to be radially aligned by elastically deforming themselves with respect to their own engaged end in each of such grooves 254;
- a prismatic insert 42 delimited by side walls 421, 422, comprising a pair of rectilinear grooves 423 adapted to house the end of such suitably blocked harmonic wires 41.

Such prismatic inserts 42 are mobile elements adapted to follow the elongation of the section of rope 1 generated by the tension gradient which is developed in the section included between inlet and outlet of the pulley 2.

This occurs through a reduction of the relative sliding speed between the rope 1 and such prismatic inserts 42, containing such sliding within a maximum value limited by the length of the arc subtending a dorsal surface 424 of each prismatic insert 42.

The prismatic inserts 42 in contact with the rope 1 through such dorsal surface 424 transmit the load to such harmonic wires 41 engaged at the ends into such grooves 254, 423, adapted to be deformed, behaving as a beam with circular section constrained at its ends by a double engagement.

Due to the load transmitted by the rope 1 and depending on the slant of each harmonic wire 41 resting onto such straight line 255, each prismatic insert 42 moves according to a trajectory which goes away from the center of the pulley 2. Such trajectory is given by the combination of a tangential translation and a radial translation.

In particular, the sum of the radial translation component of each prismatic insert 42 allows being equal to the elongation of the section of rope 1 wound onto the pulley 2.

The individual prismatic inserts 42 therefore move not only circumferentially, but also radially depending on the load increase to which they are subjected, generating a spiral trajectory increasing in the section in contact with the rope and decreasing in the free section.

Each pair of U-bent harmonic wires 41 inserted in such grooves 254, 423, under load, also has a relative divergence adapted to allow the prismatic insert 42 to rotate-translate, compensating the relative rotation with respect to the pulley center, thereby guaranteeing a constant tangential alignment of such dorsal surface 424 with the rope 1, without reducing the contact surface and the related adherence.

According to a preferred configuration of such embodiment of the present invention, a pulley 2 is composed of 120 prismatic inserts 42, such grooves 254 having a slant of 17.5° with respect to the radius of the circumference centered with the pulley 2.

The set of such prismatic inserts 42 can reach a configuration with minimum radius adapted to prevent the pulley 2 from collapsing under the rope 1 load. In such configuration with minimum radius, a front wall 425 of each prismatic insert 42 accurately abuts against a rear wall 426 of the following prismatic insert 42, thereby creating a mechanical safety limit switch with loads higher than the foreseen ones.

In particular, such front wall 425 is crossed by a groove 427 adapted to contain therein a bumper 43 made of elastomeric material.

Each peripheral support 4 is tangentially connected to two of said adjacent supports through such elastic elements 43 in order to form an elastic chain.

Such bumpers 43 allow keeping the contact between the prismatic inserts 42, both in the free section of the pulley 2, after its detachment from the rope 1, and in the loaded section of the pulley 2, and allow gradually modifying, without vibrations or impacts, the configuration of the pulley 2 during such detachment from the rope 1.

Under the no-load condition, such bumpers 43 allow contrasting the pre-loading action of such harmonic wires 41, slightly separating the prismatic inserts 42 and avoiding to reach such configuration with minimum radius.

Under the loaded condition, such bumpers 43 enable the away movement and the radial movement of the prismatic inserts 42.

The pre-load of the harmonic wires 41 is obtained through a misalignment of about 2° between the groove 423 in the prismatic insert 42 and the rectilinear section of the groove 254 in the flange 25.

Such prismatic insert 42 can be coated, in its dorsal surface 424 in contact with the rope 1, with elastomeric material or be integrally composed of such material, allowing to increase the friction coefficient between the prismatic insert 42 and the rope 1. Thereby, the adherence status is guaranteed and, through its own distortion, the minimum elongation which the rope 1 anyway develops on an individual prismatic insert 42, is recovered.

A third embodiment not forming part of the present invention is described below.

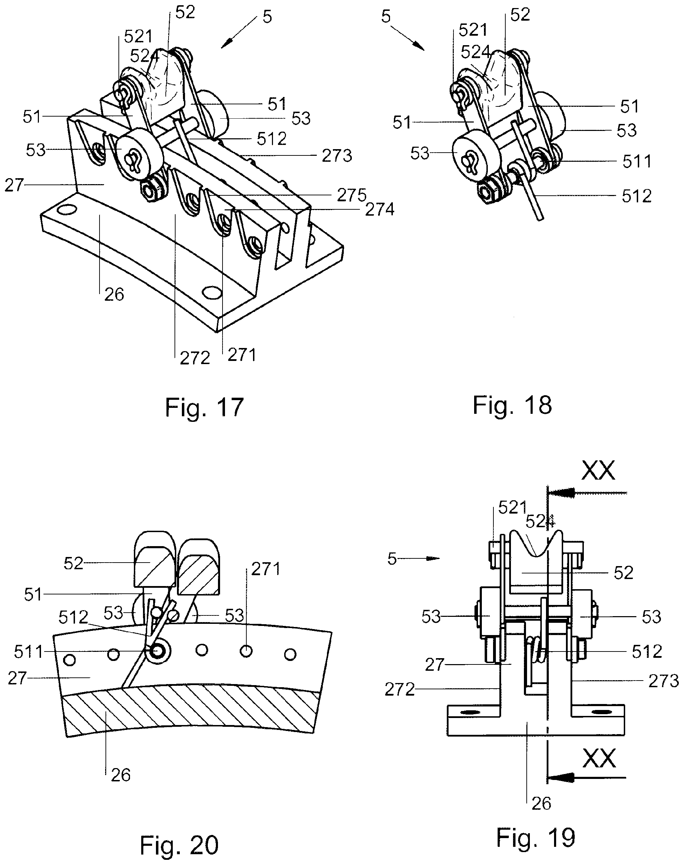

With reference to Figures 17 to 20, it is possibile to note that the disk 21 (not shown) supports a section of rope 1 (not shown) by means of a plurality of peripheral supports 5 uniformly arranged along a circumference of the disk 21.

The disk 21 comprises a peripheral ring composed of a cylindrical band 26 surmounted by a flange 27 crossed by a series of cylindrical holes 271 uniformly arranged on a circumference centered with respect to the rotation axis of the pulley 2.

Each side wall 272, 273, of such flange 27 comprises a uniformly arranged series of grooves 274 adapted to delimit the angular stroke of each of such peripheral supports 5 by means of an abutment 275 slanted by a certain angle with respect to the radius passing by the center of the pulley 2 (as shown, for example, in Figure 17).

Each of such peripheral supports 5 comprises:
- a structure 51 composed of an inclined pair of connecting rods adapted to be radially aligned by rotating with respect to their own hinged end in such hole 271 through a pin 511 and pressed against such abutment 275 through an elastic spring 512 operating along the axis of such pin 511;
- a prismatic insert 52 having a pin 521 connected to a free end of such connecting rods 51.

Such prismatic inserts 52 behave in the same way as the prismatic inserts 42 allowing to have the same elongation of the section of rope 1 wound onto the pulley 2.

Such connecting rods 51, slanted with respect to the radial direction, can rotate with respect to their own fulcrum along such pin 511 under the action of the rope tension, allowing the prismatic insert 52 to move, increasing the distance from the pulley center, thereby following the rope elongation.

The rotation axis of such pin 521 is located above the contact point of the rope 1 with respect to a dorsal surface 524 of such prismatic insert 52. Due to this, a rotation of the prismatic insert 52 under the pressure of the rope 1 occurs by keeping constant the length of the section of rope 1 in contact with such dorsal surface 524.

The tension contrasting action of the rope is given to the stiffness of such pre-loaded elastic spring 512.

Such peripheral support 5 comprises a pair of bumpers 53 adapted to perform the same functions of the bumpers 43.

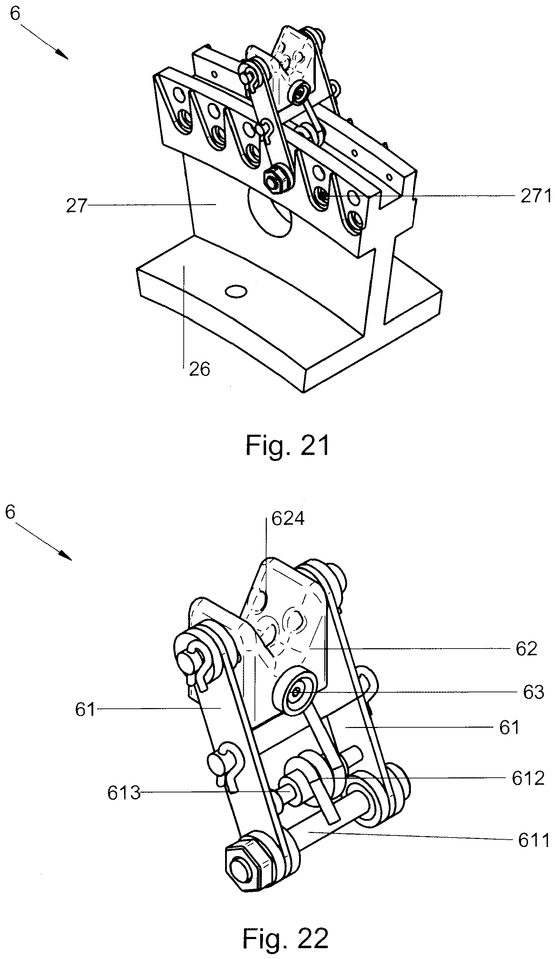

With reference to Figures 21 and 22, it is possible to note that a variation of such embodiment not forming part of the present invention consists in a peripheral support 6 comprising a pre-loaded elastic spring 612 operating along the axis of a pin 613 placed in an offset point of a pair of connecting rods 61, giving the chance of having an elastic response which is not linear, but increasing during the rotation of such connecting rod 61 with respect to a pin 611.

A prismatic insert 62 comprises a strongly arc-shaped dorsal surface 624 equipped with holes adapted to increase the adhering catch with the rope 1.

A bumper 63 made of elastomeric material is fastened to such prismatic insert 62 through a screw.

The plurality of peripheral supports 3, 4, 5, 6 make a discontinuous contact between rope 1 and pulley 2 able to make tension gradient discrete along the section of rope 1 included between the ends 11 and 12.

The pulley 2, coupled with the plurality of peripheral supports 3, 4, 5, 6, makes discrete the tension gradient of the rope 1 wound onto the periphery of the pulley 2.

In particular, the adopted solutions allow nullifying the tension gradient along each section of rope lacking contact with the peripheral support 3, 4, 5, 6.

The radial profile of each peripheral support 3, 4, 5, 6, measured in a plane X-Z (as shown, for example, in Figure 5), is subjected to an exponential function to be adapted to the tension gradient variable along the rope 1.

Each peripheral support 3, 4, 5, 6 can be coupled with a load cell that measures the distortion status and computes its load line induced by the rope 1.

The elastic behaviour, induced by the peripheral supports 3, 4, 5, 6 on the pulley 2, is exploited in a winch comprising a device (not shown) capable of storing and quickly releasing, during its tensioning, a certain amount of the rope 1 from the part 11 with high tension, or the part 12 with low tension.

Such elastic behaviour is exploited in a winch comprising a device (not shown) capable of regulating and limiting the tension of the rope 1 from the part 11 with high tension, or the part 12 with low tension.

A winch, not forming part of the present invention, composed of at least one pulley 2 equipped with peripheral supports 3, 4, 5, 6, supports and guides a rope 1 wound by a revolution, such rope 1 being stored in a low tension status.

A winch is composed of n pulleys 2 equipped with peripheral supports 3, 4, 5, 6, at least two of which pulleys are motored,

A winch is composed of four motored pulleys 2, equipped with peripheral supports 3, 4, 5, 6, said pulleys 2 being arranged on the vertexes of an ideal rectangle (as shown, for example, in Figure 10).

A winch is composed of four motored pulleys 2, equipped with peripheral supports 3, 4, 5, 6, said pulleys 2 beiong arranged along rotation axes which are not mutually parallel.

## Claims

1. pulley (2) for a winch, in contact with at least one section of rope (1) included between an inlet section (11) connected to a working load and an outlet section (12) connected to a resisting load, said pulley (2) comprising a plurality of peripheral supports (4) deformable depending on a length variation of said section of rope (1), each of said peripheral supports (4) comprising at least one structure (41) adapted to support at least one prismatic insert (42) adhering to said section of rope (1), **characterized in that** said structure (41) is composed of at least one inclined pair of U-bent harmonic wires adapted to be radially aligned by elastically deforming with respect to an engaged end thereof.

2. pulley (2) according to the previous claim, **characterized in that** each of said structures (41) is shaped as to constrain said prismatic insert (42) to move according to a combination of a tangential direction and a radial direction.

3. pulley (2) according to any one of the previous claims, **characterized in that** each of said peripheral supports (4) is connected to two of said adjacent peripheral through bumpers (43) in order to form an elastic chain.

4. pulley (2) according to any one of the previous claims, **characterized in that** each of said peripheral supports (4) is coupled with a load cell that measures a distortion status and computes its load line induced by said rope (1).

## Patentansprüche

1. Riemenscheibe (2) für Hebewinde oder Winde, die mit mindestens einem Seilabschnitt (1) in Kontakt steht, zwischen einem Eingangsabschnitt (11), der mit einer Nutzlast verbunden ist, und einem Ausgangsabschnitt (12), der mit einer Widerstandslast verbunden ist, die genannte Riemenscheibe (2) schließt mehrere periphere Halterungen (4) ein, die je nach Längenänderung des genannten Seilabschnitts (1) verformbar sind, jede der genannten peripheren Halterungen (4) schließt mindestens eine Struktur (41) ein, die dazu dient, mindestens einen Prismeneinsatz (42) zu tragen, der am genannten Seilabschnitt (1) haftet, und ist **dadurch gekennzeichnet, dass** die genannte Struktur (41) aus mindestens einem geneigten Paar Federstahldrähte besteht, die U-förmig gebogen sind und dazu dienen, sich radial durch die elastische Verformung zu einem ihrer gespannten Enden auszurichten.

2. Riemenscheibe (2) gemäß dem vorhergehenden Patentanspruch, die **dadurch gekennzeichnet ist, dass** jede der genannten Strukturen (41) so gestaltet ist, dass sie den genannten Prismeneinsatz (42) dazu zwingt, sich gemäß der Kombination einer Tangentialrichtung und einer Radialrichtung zu verschieben.

3. Riemenscheibe (2) gemäß einem der vorhergehenden Patentansprüche, die **dadurch gekennzeichnet ist, dass** jede der genannten peripheren Halterungen (4) mit zwei der genannten nebeneinander liegenden, peripheren, durchgehenden, abstoßenden Halterungen (43) verbunden ist, um eine elastische Kette zu bilden.

4. Riemenscheibe (2) gemäß einem der vorhergehenden Patentansprüche, die **dadurch gekennzeichnet ist, dass** jede der genannten peripheren Halterungen (41) mit einer Lastzelle verkuppelt ist, die einen Verdrehungszustand misst und seine Lastlinie berechnet, die durch das genannte Seil (1) induziert wird.

## Revendications

1. Poulie (2) pour treuil ou cabestan, au contact au moins d'un tronçon de câble (1) compris entre un tronçon d'entrée (11) relié à une charge utile et un tronçon de sortie (12) relié à une charge résistante ; la poulie (2) comprend une pluralité de supports périphériques (4) déformables selon la variation de longueur du tronçon de câble (1) ; chaque support périphérique (4) comprend au moins une structure (41) apte à soutenir au moins un insert prismatique (42) qui adhère au tronçon de câble (1) ; **caractérisée en ce que** la structure (41) est composée au moins d'un couple incliné de fils en acier harmonique pliés en U en mesure de s'aligner dans le sens radial par déformation élastique par rapport à l'une de leur extrémité engagée.

2. Poulie (2), selon la revendication précédente, **caractérisée en ce que** chaque structure (41) est prédisposée de sorte à obliger l'insert prismatique (42) à se déplacer par l'association entre une direction tangentielle et une direction radiale.

3. Poulie (2), selon l'une des revendications précédentes, **caractérisée en ce que** chaque support périphérique (4) est relié à deux butoirs traversants périphériques adjacents (43) afin de former une chaîne élastique.

4. Poulie (2), selon l'une des revendications précédentes, **caractérisée en ce que** chaque support périphérique (41) est accouplé à une cellule de charge qui mesure l'état de distorsion et calcule sa ligne de charge induite par le câble (1).
